(19) Europäisches Patentamt
European Patent Office
Office européen des brevets

(11) EP 0 730 016 B1

(12) **EUROPEAN PATENT SPECIFICATION**

(45) Date of publication and mention
of the grant of the patent:
**09.06.1999 Bulletin 1999/23**

(51) Int Cl.⁶: **C09J 127/06**, C09J 123/10,
B32B 27/30, B29C 41/00

(21) Application number: **96103165.5**

(22) Date of filing: **01.03.1996**

(54) **Adhesive composition and use thereof**

Klebstoffzusammensetzung und ihre Verwendung

Composition adhésive et son utilisation

(84) Designated Contracting States:
**DE FR GB IT NL**

(30) Priority: **02.03.1995 JP 4280095**

(43) Date of publication of application:
**04.09.1996 Bulletin 1996/36**

(73) Proprietor: **SUMITOMO CHEMICAL COMPANY
LIMITED
Osaka-shi, Osaka 541-0041 (JP)**

(72) Inventors:
• **Sugimoto, Hiroyuki
Yasu-gun, Shiga-ken (JP)**
• **Nakatsuji, Yoshihiro
Toyonaka-shi, Osaka-fu (JP)**
• **Ohtani, Kohsuke
Ibaraki-shi, Osaka-fu (JP)**

• **Igarashi, Toshio
Kyoto-shi, Kyoto-fu (JP)**
• **Funakoshi, Satoru
Osaka-shi, Osaka-fu (JP)**

(74) Representative: **VOSSIUS & PARTNER
Siebertstrasse 4
81675 München (DE)**

(56) References cited:
**EP-A- 0 508 801**

• **CHEMICAL ABSTRACTS, vol. 121, no. 18, 31
October 1994 Columbus, Ohio, US; abstract no.
207447, XP002005214 & JP-A-06 106 553
(SUMITOMO CHEMICAL CO.) 19 April 1994**
• **CHEMICAL ABSTRACTS, vol. 121, no. 22, 28
November 1994 Columbus, Ohio, US; abstract
no. 257705, XP002005215 & JP-A-06 170 871
(SUMITOMO CHEMICAL CO.) 21 June 1994**

## Description

The present invention relates to an adhesive composition and use thereof. In particular, the present invention relates to an adhesive composition, a molded article comprising the same, and a method for producing a molded article using the same.

Hitherto, a molded article having complicated decorations such as leather grain and stitch on its surface is used as an interior material of an automobile, and so on. As such molded article, a multi-layer molded article comprising a polyolefin core layer and a skin layer made of a vinyl chloride resin is proposed (see JP-A-63-251206). However, such multi-layer molded article does not have a sufficient adhesion force between the vinyl chloride resin layer and the polyolefin layer, and the improvement of the adhesion force is keenly desired.

One object of the present invention is to provide an adhesive composition which can provide a good adhesion force between a vinyl chloride resin and a polyolefin.

Another object of the present invention is to provide a molded article comprising said adhesive composition.

A further object of the present invention is to provide a method for producing a molded article comprising said adhesive composition.

A yet further object of the present invention is to provide a composite molded article comprising a vinyl chloride resin layer and an adhesive layer which comprises said adhesive composition, and a method for producing said composite molded article.

A still further object of the present invention is to provide a multi-layer molded article comprising a vinyl chloride resin layer, an adhesive layer which comprises said adhesive composition, and a polyolefin layer, and a method for producing said multi-layer molded article.

According to a first aspect of the present invention, there is provided an adhesive composition comprising 100 wt. parts of a vinyl chloride resin (A) and 10 to 350 wt. parts of a polyolefin (A) having a complex dynamic viscosity $\eta^*$ of not larger than $1.2 \times 10^5$ poise.

In one embodiment of the above adhesive composition, the adhesive composition further comprises 20 wt. parts or less of a heat decomposable blowing agent per 100 wt. parts of the vinyl chloride resin to provide a foamable adhesive composition.

According to a second aspect of the present invention, there is provided a molded article comprising said adhesive composition according to the first aspect of the present invention.

According to a third aspect of the present invention, there is provided a method for producing said molded article comprising molding a powder of said adhesive composition according to the first aspect of the present invention.

According to a fourth aspect of the present invention, there is provided a composite molded article comprising a layer of a vinyl chloride resin and an adhesive layer of said adhesive composition according to the first aspect of the present invention.

According to a fifth aspect of the present invention, there is provided a method for producing said composite molded article comprising powder molding a vinyl chloride resin (B) powder to form a layer of the vinyl chloride resin. In a preferred embodiment, this method comprises steps of:

(1) supplying powder of a vinyl chloride resin (B) in a mold which is kept at a temperature higher than the melting temperature of said vinyl chloride resin,
(2) heating and fusion melting powder particles on a surface of said mold to form a layer of the vinyl chloride resin, followed by removing of a part of said powder which has not been attached to said surface of the mold,
(3) supplying powder of the adhesive composition according to the first aspect of the present invention on the layer of the vinyl chloride resin which is kept at a temperature higher than the melting temperature of said adhesive composition,
(4) adhering and melting said powder of the adhesive composition onto said layer of the vinyl chloride resin to form an adhesive layer, followed by removing of a part of the adhesive composition which has not been adhered to said layer of the vinyl chloride resin,
(5) optionally heating said layer of the vinyl chloride resin and said adhesive layer of the adhesive composition, especially when the adhesive composition contains a heat decomposable blowing agent, and
(6) cooling the laminate to obtain the composite molded article.

According to a sixth aspect of the present invention, there is provided a multi-layer molded article comprising a layer of a vinyl chloride resin, a layer of said adhesive composition according to the first aspect of the present invention, and a layer of a polyolefin.

According to a seventh aspect of the present invention, there is provided a method for producing a multi-layer molded article comprising steps of laminating a layer of a vinyl chloride resin on one surface of a layer of said adhesive composition according to the first aspect of the present invention, providing a melt of a polyolefin preheated to a temperature higher than the melting temperature of said polyolefin on the layer of the adhesive composition, pressing said melt to form a layer of the polyolefin, and cooling the laminated layers.

In one preferred embodiment, a laminate of said layer of the vinyl chloride resin and said layer of the adhesive composition may be separately formed in advance.

In another preferred embodiment, this method can be carried out using male and female molds.

Fig. 1 is a cross sectional view of a container containing a resin composition for powder molding and a mold for powder molding.

Fig. 2 is a cross sectional view of a mold for powder molding which carries a composite layer (vinyl chloride resin layer/adhesive layer).

Fig. 3 depicts the supply of a polyolefin between male and female molds wherein the mold for powder molding which carries the composite layer is inserted in a female mold base.

Fig. 4 shows a closed state of the male and female molds for molding the polyolefin.

Fig. 5 shows a cross sectional view of a multi-layer molded article consisting of a vinyl chloride resin layer, an adhesive layer and a polyolefin layer.

One of the characteristics of the adhesive composition according to the present invention is that it comprises a polyolefin having a complex dynamic viscosity $\eta^*$ of not larger than $1.2 \times 10^5$ poise. The complex dynamic viscosity $\eta^*$ is calculated from a storage modulus G' and a loss modulus G", which are measured at 250°C and a frequency ($\omega$) of 1 radian/sec., according the following equation (1):

$$\eta^* = [(G')^2 + (G'')^2]^{1/2}/\omega \tag{1}$$

In view of the adhesion property between the vinyl chloride resin layer and the polyolefin layer, the complex dynamic viscosity $\eta^*$ is preferably not larger than $1 \times 10^5$ poise.

When an adhesive composition comprising a polyolefin having a complex dynamic viscosity $\eta^*$ larger than $1.2 \times 10^5$ poise and the vinyl chloride resin is used as an adhesive layer, the adhesion between the vinyl chloride resin layer and the polyolefin layer is insufficient.

There is no specific lower limit of the complex dynamic viscosity $\eta^*$. Usually, the lower limit of the complex dynamic viscosity $\eta^*$ is $1 \times 10^2$ poise.

Examples of the polyolefin (hereinafter referred to as "polyolefin (A)") to be contained in the adhesive composition of the present invention are polyolefin resins (hereinafter referred to as "polyolefin (C)"), polyolefin-base thermoplastic elastomers, and polyolefin rubbers.

Specific examples of the polyolefin (C) are an ethylene homopolymer, copolymers of ethylene with at least one copolymerizable monomer having 3 to 10 carbon atoms such as propylene and butene, a propylene homopolymer and copolymers of propylene with at least one copolymerizable monomer having 4 to 10 carbon atoms such as 1-butene, 2-butene.

Specific examples of the polyolefin-base thermoplastic elastomer are a composition comprising an ethylene-$\alpha$-olefin copolymer rubber and a polyolefin resin and a partially crosslinked composition comprising an ethylene-$\alpha$-olefin copolymer rubber and a polyolefin resin (hereinafter referred to as "polyolefin (D)").

Examples of the ethylene-$\alpha$-olefin copolymer rubber are rubbers comprising olefins such as an ethylene-propylene copolymer rubber or an ethylene-propylene-non-conjugated diene copolymer. Examples of the non-conjugated diene are dicyclopentadiene, ethylidenenorbornene, 1,4-hexadiene, cyclooctadiene and methylene-norbonene. Among these ethylene-$\alpha$-olefin copolymer rubbers, an ethylene-propylene-ethylidenenorbornene rubber is more preferably used since the obtained thermoplastic elastomer is excellent in heat resistance.

The ethylene-$\alpha$-olefin copolymer rubber may be an oil-extended olefin base copolymer rubber comprising a mineral oil base softener such as a paraffin base process oil. The oil-extended olefin base copolymer rubber is excellent in its melt flowability. An amount of the mineral oil base softener is usually not more than 120 wt. parts, preferably 30 to 120 wt. parts per 100 wt. parts of the ethylene-$\alpha$-olefin copolymer rubber.

Preferred examples of the polyolefin (D) are polypropylene, copolymers of propylene and ethylene, copolymers of propylene and at least one $\alpha$-olefin having 4 to 10 carbon atoms.

A weight ratio of the ethylene-$\alpha$-olefin copolymer rubber to the polyolefin (D) is usually from 5:95 to 80:20.

The partially crosslinked composition may be obtained by dynamic crosslinking. For example, the dynamic crosslinking may be performed by kneading the composition of the ethylene-$\alpha$-olefin copolymer rubber and the polyolefin (D) which has been prepared by kneading, and a crosslinking agent while heating. During the dynamic crosslinking, the ethylene-$\alpha$-olefin copolymer rubber is preferentially crosslinked in the composition of the ethylene-$\alpha$-olefin copolymer rubber and the polyolefin resin, whereby the desired partially crosslinked composition is obtained. The partially crosslinked composition may contain uncrosslinked ethylene-$\alpha$-olefin copolymer rubber, or a crosslinked material between the ethylene-α-olefin copolymer rubber and the polyolefin resin. Optionally, the composition may contain a crosslinked material of the polyolefin resin.

As the crosslinking agent to be used in the preparation of the partially crosslinked composition, an organic peroxide is used generally. As the organic peroxide, a dialkyl peroxide is preferably used. The dynamic crosslinking may be performed using a very small amount of the organic peroxide in the presence of a crosslinking aid such as a bismaleimide compound. In this case, a composition in which the ethylene-α-olefin copolymer rubber is crosslinked to an adequate extent is obtained, so that the composition has improved heat resistance and also good flowability.

An amount of the crosslinking agent is usually 1 wt. part or less, preferably 0.8 wt. part or less, per 100 wt. parts of the total weight of the ethylene-α-olefin copolymer rubber and the polyolefin resin. When the organic peroxide is used as the crosslinking agent in the presence of the crosslinking aid, an amount of the crosslinking agent is usually 1 wt. part or less, preferably 0.8 wt. part or less, more preferably 0.6 wt. part or less, per 100 wt. parts of the total weight of the ethylene-α-olefin copolymer rubber and the polyolefin resin, and an amount of the crosslinking aid is usually 1.5 wt. part or less, preferably 0.8 wt. part or less, per 100 wt. parts of the total weight of the ethylene-α-olefin copolymer rubber and the polyolefin resin.

To perform the dynamic crosslinking, the crosslinking aid is preferably added to the composition prior to the dynamic crosslinking. In general, the crosslinking aid is added to the composition during the above kneading.

In general, the dynamic crosslinking is performed by continuous kneading and extrusion using a single or twin-screw kneading extruder.

Examples of the polyolefin rubbers are ethylene-α-olefin copolymer rubbers which constitute the thermoplastic elastomers.

When the adhesive composition of the present invention is molded by a powder molding method which will be explained below, or when the composite molded article is produced by the powder molding method, the polyolefin-base thermoplastic elastomer Is preferred as the polyolefin (A), in view of easy release of a molded article from a mold for powder molding.

The complex dynamic viscosity varies depending on various factors. In general, the complex dynamic viscosity increases, as a molecular weight increases. The complex dynamic viscosity decreases as a content of the mineral oil softener in the oil-extended olefin copolymer increases.

Then, to satisfy the above requirement for the complex dynamic viscosity according to the present invention, various parameters such as molecular weights of the polyolefin (A) and/or the ethylene-α-olefin copolymer rubber, kinds and weight ratios of the components constituting the polyolefin-base thermoplastic elastomer, a crosslinking degree, amounts of the mineral oil softener and other additives which will be explained below should be selected by taking into account influences of these parameters on the complex dynamic viscosity.

Further, since the kneading conditions and a shear rate during the dynamic crosslinking have influences on the complex dynamic viscosity, preferably the kneading and the dynamic crosslinking are performed at a shear rate of at least $1 \times 10^3$ sec$^{-1}$, when the dynamic crosslinking is carried out by the twin-screw kneading and extrusion.

Examples of the vinyl chloride resin (hereinafter referred to as "vinyl chloride resin (A)") contained in the adhesive composition of the present invention are a vinyl chloride homopolymer, copolymers of vinyl chloride with at least one monomer copolymerizable therewith such as a vinyl chloride-vinyl acetate copolymer, a vinyl chloride-ethylene copolymer, a vinyl chloride-propylene copolymer, a vinyl chloride-isobutylene copolymer, a vinyl chloride-styrene copolymer, a vinyl chloride-vinylidene chloride copolymer, a vinyl chloride-butadiene copolymer, a vinyl chloride-acrylate copolymer, a vinyl chloride-maleate copolymer, a vinyl chloride-methacrylate copolymer, a vinyl chloride-acrylonitrile copolymer, a vinyl chloride-styrene-maleic anhydride terpolymer, a vinyl chloride-vinylidene chloride-vinyl acetate copolymer, a vinyl chloride-styrene-acrylonitrile copolymer, a graft polymer of vinyl chloride on an ethylene-vinyl acetate copolymer, and mixtures thereof.

An amount of the polyolefin (A) to be contained in the adhesive composition of the present invention is usually from 10 to 350 wt. parts, preferably from 20 to 200 wt. parts, more preferably from 30 to 150 wt. parts, per 100 wt. parts of the vinyl chloride resin (A).

When the amount of the polyolefin (A) is less than 10 wt. parts or larger than 350 wt. parts, the adhesion property between the vinyl chloride resin layer and the polyolefin layer is deteriorated in the multi-layer molded article using the adhesive composition as the adhesive layer between two resin layers.

The adhesive composition according to the present invention may contain any of conventionally used additives such as a plasticizer, a stabilizer, a blowing agent, a crosslinking agent, an antistatic agent, a metal soap, a lubricant, a pigment, a blowing aid, a foam suppressor, a liquid coating agent and a mold release agent.

Preferred examples of the plasticizer are dialkyl phthalates each alkyl moiety of which has 9 to 11 carbon atoms such as diisodecyl phthalate and diisoundecyl phthalate, or trialkyl trimellitates each alkyl moiety of which has 7 to 11 carbon atoms such as trioctyl trimellitate, tri-2-ethylhexyl trimellitate and tridecyl trimellitate. An amount of the plasticizer is usually from 40 to 120 wt. parts per 100 wt. parts of the vinyl chloride resin.

Preferred examples of the stabilizer are compounds of metals such as zinc, barium, sodium, potassium, calcium, lithium and tin, such as metal salts of carboxylic acids. Among them, their composite stabilizers are preferably used. Further, magnesium oxide, magnesium hydroxide, hydrotalcite, lithium-aluminum composite hydrate, zinc oxide, barium oxide, calcium oxide or barium phosphate, may be used in combination with the above stabilizer. In addition, phenol base, thioether base or phosphorus base antioxidants, diketo compound base, salicylic acid base, benzophenone base or benzotriazole base light stabilizers, or epoxy compounds may be used in combination with the above stabilizer. When the stabilizer is used, its amount is usually from 3 to 15 wt. parts per 100 wt. parts of the vinyl chloride resin.

Examples of the blowing agent are heat decomposable azo compounds (e.g. azodicarbonamide, 2,2'-azobisisobutyronitrile, diazodiaminobenzene), sulfonylhydrazide compounds (e.g. benzenesulfonylhydrazide, benzene-1,3-sulfonylhydrazide, diphenylsulfone-3,3'-disulfonylhydrazide, diphenyloxide-4,4'-disulfonylhydrazide, 4,4'-oxybis(benzenesulfonylhydrazide), p-toluenesulfonylhydrazide), nitroso compounds (e.g. N,N'-dinitrosopentamethylenetetramine, N,N'-dinitroso-N,N'-dimethylterephthalamide), azide compounds (e.g. terephthalazide, p-tert.-butylbenzazide ) and carbonates (e.g. sodium bicarbonate, ammonium bicarbonate, ammonium carbonate). Among them, azodicarbonamide is preferably used.

When the heat decomposable blowing agent is used, its amount is usually less than 20 wt. parts, preferably from 0.1 to 20 wt. parts, more preferably from 1 to 10 wt. parts per 100 wt. parts of the vinyl chloride resin.

Examples of the crosslinking agent are polymers having at least one active hydrogen atom, and crosslinkable isocyanate compounds.

Specific examples of the polymers having at least one active hydrogen atom are vinyl chloride copolymers having a hydroxyl group or an epoxy group (e.g, a vinyl chloride-hydroxyacrylate copolymer, a vinyl chloride-glycidyl acrylate copolymer) and acrylic copolymers having a hydroxyl group or an epoxy group (e.g. an alkyl acrylate-hydroxyacrylate copolymer, an alkyl acrylate-glycidyl acrylate copolymer).

Specific examples of the crosslinking isocyanate compounds are compounds having an isocyanate group in a molecule (e.g. diphenylmethane diisocyanate, toluylene diisocyanate) and compounds having a capped isocyanate group such as the above isocyanate compounds in which the isocyanate group is capped with a phenol or a cresol. Among them, the compounds having the capped isocyanate group are preferred in view of easy handling properties.

An amount of the polymer having at least one active hydrogen atom is usually from 0.5 to 40 wt. parts, preferably from 1 to 20 wt. parts per 100 wt. parts of the vinyl chloride resin (A), and an amount of the crosslinkable isocyanate compound is usually from 0.1 to 10 wt. parts, preferably from 0.5 to 5 wt. parts per 100 wt. parts of the vinyl chloride resin (A).

In addition to the above additives, the adhesive composition of the present invention may contain a mixture comprising a quaternary ammonium salt, a polyfunctional epoxy compound and an epoxy resin curing agent.

In this mixture, the quaternary ammonium salt may be a compound of the formula:

$$(R)_4NX \hspace{4cm} (I)$$

wherein four R group are the same or different and represent an alkyl group such as a methyl group or an octyl group, or an aralkyl group such as a benzyl group, or two or more R groups form a hetero ring together with the nitrogen atom; and X is a halogen atom such as a chlorine atom or a bromine atom, or an acid group such as a sulfonic acid group or a nitric acid group. Examples of the quaternary ammonium salt of the formula (I) are trioctylmonomethylammonium chloride and N-methylpyridiniumammonium chloride.

An amount of the quaternary ammonium compound is usually from 0.02 to 5 wt. parts per 100 wt. parts of the vinyl chloride resin (A).

The polyfunctional epoxy compound means a compound having at least two epoxy groups in a molecule. Examples of such epoxy compound are epoxidized soybean oil, epoxidized linseed oil, and epoxy resins.

An amount of the polyfunctional epoxy compound is usually from 1 to 30 wt. parts per 100 wt. parts of the vinyl chloride resin (A).

As the epoxy resin curing agent, any of conventionally used epoxy resin curing agents may be used. Examples of such curing agent are amine compounds, diamine compounds, polyamine compounds, polyamide compounds, amino acids and polybasic acids having at least two carboxyl groups and their anhydrides. Among them, the amino acids (e.g. ε-aminocaproic acid), the polybasic acids (e.g. adipic acid), the acid anhydrides (e.g. succinic anhydride, maleic anhydride, phthalic anhydride, trimellitic anhydride, pyromellitic anhydride, methylhexahydrophthalic anhydride) and condensation products of the polybasic acids corresponding to these anhydrides with glycols. They may be used independently or in combination of two or more of them.

An amount of the epoxy resin curing agent is usually from 0.2 to 10 wt. parts per 100 wt. parts of the vinyl chloride resin (A).

The adhesive composition of the present invention may be prepared by a per se conventional method using a compounding apparatus such as open rolls, a blender, a Banbury mixer, a kneader and a high speed mixer in the form of a powder composition or a melt kneaded composition.

When the powder composition is prepared, a high speed mixer, or a compounding apparatus which can prevent mutual adhesion of the powder particles by the application of the shear force is used in general. In this case, the components are compounded while removing heat by a jacket to prevent thermal fusion of the powder.

An example of the preparation of the powder composition containing a blowing agent will be illustrated.

For example, a granular vinyl chloride resin (A) is dry blended with various additives such as a plasticizer, a blowing agent, etc., and then an additional amount of the vinyl chloride resin (A) is compounded. Thereafter, the polyolefin resin (A) is compounded to obtain the powder composition. As the vinyl chloride (A) to be additionally added, fine particle one is preferred to prevent mutual adhesion of the adhesive composition powder by coating the granular vinyl chloride resin (A) by the additional vinyl chloride resin.

A temperature in the dry blending is usually from 60 to 130°C, a temperature in the additional compounding of the vinyl chloride resin (A) is usually from 40 to 80°C, and a temperature in the compounding of the polyolefin is usually from 20 to 60°C.

When the crosslinking agent is compounded in the composition, it is compounded generally after the above dry blending and before the additional compounding of the vinyl chloride resin. A temperature in compounding the crosslinking agent is usually from 50 to 130°C.

The granular vinyl chloride resin (A) is explained above, and has a particle size of from 100 to 150 $\mu$m. In general, the granular vinyl chloride resin (A) is prepared by suspension polymerization or bulk polymerization.

The fine particle vinyl chloride resin (A) to be additionally compounded may be a vinyl chloride homopolymer, or a copolymer of vinyl chloride and a copolymerizable monomer such as ethylene, propylene or vinyl acetate. A mixture of two or more kinds of the copolymers may be used.

The fine particle vinyl chloride resin (A) has a particle size of 0.1 to 10 $\mu$m, and may be prepared by emulsion polymerization, micropolymerization, and so on.

The polyolefin has a particle size of 0.1 to 2500 $\mu$m, preferably 1 to 500 $\mu$m.

The adhesive composition of the present invention may be molded by a per se conventional such as powder molding, inflation molding or extrusion molding.

A molding temperature is from 160 to 300°C, preferably from 180 to 280°C when the adhesive composition contains no blowing agent, or from 180 to 280°C, preferably from 180 to 260°C when the composition contains a blowing agent.

A thickness of the non-foam molded article is from 0.3 to 2 mm, preferably from 0.5 to 1 mm, and a thickness of the foam molded article is from 0.5 to 5 mm, preferably from 1 to 3 mm.

When the powder adhesive composition is molded by, for example, the powder molding, it is supplied in a mold which is preheated to a temperature sufficiently higher than a melting temperature of the powder composition, for example, at least 30°C higher than the melting temperature, and the powder is attached to a surface of the mold and molten to form a layer. Optionally, the formed layer is further heated, especially when the adhesive composition contains the blowing agent for forming a foam layer. Thereafter, the formed layer is cooled.

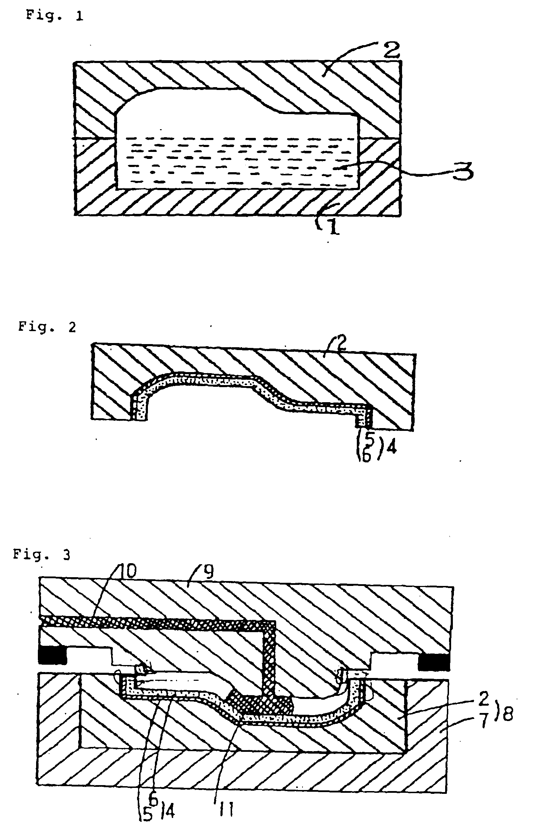

When the adhesive composition is molded by powder slush molding which is one of the powder molding methods (see JP-A-58-132057), a container containing the powder adhesive composition and a mold which is heated to a temperature sufficiently higher than the melting temperature of the composition are mated together as shown in Fig. 1, and they are rotated and/or rocked to attach the powder on the surface of the mold and melt it, whereby a layer of the molten composition is formed. Thereafter, the unattached or unmolten powder is recovered in the container, and then the container is detached from the mold.

Optionally, the formed layer is further heated, especially when the adhesive composition contains the blowing agent for forming a foam layer after recovering the unattached powder in the container. Thereafter, the formed layer is cooled.

A heating method employed in the powder molding method is not limited, and selected from, for example, a gas heating furnace method, an electric heating furnace method, a heat transfer medium-circulation method, a dipping method in a heat transfer medium oil or a heated fluidized sand or a radiofrequency induction heating method. Such heating method may be used for blowing the molten powder composition also.

The vinyl chloride resin layer of the composite molded article according to the present invention may be prepared by any of conventional molding methods. When the vinyl chloride resin layer is used as a skin layer, the powder molding method is preferably used, because a complicated decoration such as leather grains or stitches can be imparted to the layer and also a composite molded article comprising the skin layer and the adhesive layer formed from the adhesive composition of the present invention is easily produced. The powder molding method includes a fluidized dip method, a powder sintering method, an electrostatic powder coating method, a powder spray coating method, a rotational powder molding method and a powder slush molding method. Among them, the powder molding method is preferred, and the powder slush molding method is more preferred.

When the vinyl chloride resin layer is formed by, for example, the powder molding method, the powder composition comprising, in addition to a vinyl chloride resin (hereinafter referred to as "vinyl chloride resin (B)"), various additives such as a plasticizer, a stabilizer, a pigment, etc. are usually used. As the vinyl chloride resin (B), the same vinyl chloride resin as the vinyl chloride resin (A) may be used.

The powder composition may be prepared by the same method as used in the preparation of the above adhesive composition, and kinds and amounts of the additives such as the plasticizer and the stabilizer are the same as above.

The composite molded article comprising the layer of the vinyl chloride resin (B) and the adhesive layer of the adhesive composition may be produced by forming each of the layers separately, and adhering them together. In this case, the layers are usually adhered by pressing them with, for example, a press molding machine under pressure of 1 to 50 kg/cm$^2$, preferably 10 to 30 kg/cm$^2$, at a temperature of 150 to 280°C, preferably 180 to 250°C.

Alternatively, the composite molded article comprising the vinyl chloride resin layer and the adhesive layer can be produced by the above described powder molding method.

For example, when the powder slush molding method is employed, the composite molded article can be produced as follows:

(1) A container containing the powder composition for the vinyl chloride resin layer and a mold which is heated to a temperature sufficiently higher than the melting temperature of the composition, for example, at least 30°C higher than the melting point are mated together, and they are rotated and/or rocked to attach the powder on the surface of the mold and melt it, whereby a layer of the molten composition is formed. Thereafter, the unattached or unmolten excessive powder is recovered in the container, and then the container is detached from the mold.

(2) A container containing the powder adhesive composition and the mold which has the already formed vinyl chloride resin layer are mated together, and they are rotated and/or rocked to adhere the powder adhesive composition on the formed vinyl chloride resin layer on the mold and melt it, whereby a layer of the molten composition is formed. Thereafter, the excessive powder is recovered in the container, and then the container is detached from the mold. After the recovery of the excessive powder in the container, the mold may be further heated.

The mold to be used in the above powder slush molding method may have complicated decoration on its inner wall.

A temperature in the powder molding method is usually from 160 to 300°C, preferably from 180 to 280°C.

A molding time is not limited and selected according to a size and a thickness of the composite molded article, and other conditions.

When the foamable composition is used, a blowing temperature is usually from 180 to 280°C, preferably from 180 to 260°C.

A blowing time is not limited and determined according to a thickness of the foam layer or an expansion ratio.

When the vinyl chloride resin layer and the polyolefin layer are adhered, the sheet or film form vinyl chloride resin layer and/or the sheet or film form adhesive layer may be used, or the vinyl chloride resin layer and the adhesive layer may be formed at the same time.

When the multi-layer molded article comprising the vinyl chloride resin layer, the adhesive layer and the polyolefin layer is produced, for example, the vinyl chloride resin layer and the adhesive layer are laminated, and a melt of polyolefin which has been preheated to a temperature higher than its melting temperature is supplied on the adhesive layer side. Then, they are integrated together by pressing using the above described press molding machine. Alternatively, the vinyl chloride resin layer is provided in one of male and female molds, and then the preformed film or sheet as the adhesive layer is placed between the molds. Thereafter, the melt of polyolefin is supplied between the film or sheet and the other of the male and female molds, and then the molds are closed to integrate the vinyl chloride resin layer, the adhesive layer and the polyolefin layer. A closing direction of the molds is not limited, and may be a vertical direction or a horizontal direction.

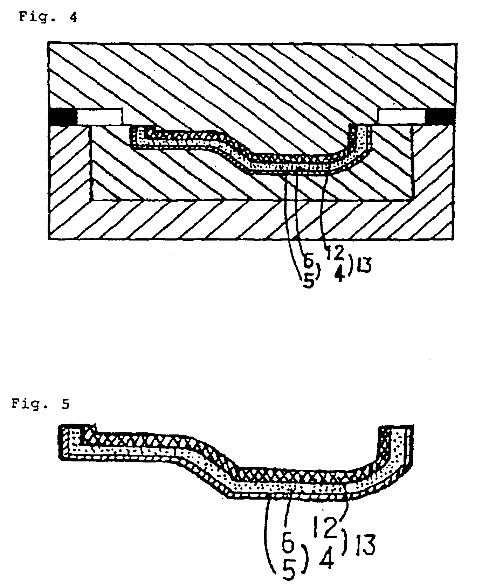

When an integrated material of the vinyl chloride resin layer and the adhesive layer is used, it is supplied in one of the male and female molds as shown in Fig. 2, and the melt of polyolefin is supplied between the integrated material and the other mold. Then, the molds are closed to integrate the vinyl chloride resin layer, the adhesive layer and the polyolefin layer.

When the vinyl chloride resin layer is formed by the powder molding method, or when the vinyl chloride resin layer and the adhesive layer are integrally formed by the powder molding method, the formed layer or layers is or are maintained in the cavity of the mold for powder molding, and the mold is inserted in a mold base of a male or female mold for compression molding as shown in Fig. 3. In this method, when the vinyl chloride resin layer having a transferred decoration from the mold surface is used, the transferred decoration is not or hardly deformed and the desired multi-layer molded article can be obtained, since the vinyl chloride resin layer which is maintained in the mold is used in the molding of the polyolefin layer.

In a preferred embodiment, the molds are closed during or after the supply of the polyolefin melt, since the vinyl chloride resin layer and the polyolefin layer are less shifted, and the multi-layer molded article having an improved level of the transfer of the decoration from the mold to the vinyl chloride resin layer can be obtained.

A method for supplying the polyolefin melt is not limited. For example, the polyolefin melt is supplied through at least one conduit provided in the male or female mold which faces the adhesive layer. Alternatively, at least one resin supply nozzle is inserted in the cavity between the male and female molds, and the polyolefin melt is supplied in the mold through the nozzle. In this case, the nozzle is removed from the mold cavity before the mold closing is started.

As the molds, a pair of male and female molds which are closed or opened in a manner that an outer peripheral surface of one of them and an inner peripheral wall of the other of them move with closely facing each other can be used. When a clearance between the outer periphery and the inner peripheral wall is made substantially the same as a thickness of the vinyl chloride resin layer, a molded article having a marginal part of the vinyl chloride resin layer at edges of the article can be obtained. When the marginal part of the vinyl chloride resin layer is folded back and adhered to the back face of the article, the article all the peripheries of which are covered by the vinyl chloride resin layer is obtained.

Examples of the polyolefin which is used to form the polyolefin layer (hereinafter referred to as "polyolefin (B) ") are a propylene homopolymer, a propylene-ethylene block copolymer, a propylene-butene random copolymer, an ethylene-propylene-butene terpolymer or a polyolefin-base thermoplastic elastomer.

The polyolefin (B) has a melt index of 0.1 to 300 g/10 min., preferably 1 to 200 g/10 min.

The polyolefin may contain one or more additives such as a filler (e.g. an inorganic filler, glass fiber), a pigment, a lubricant and an antistatic agent, if necessary.

Since the multi-layer molded article of the present invention has good adhesion between the vinyl chloride resin layer and the polyolefin layer, it finds various applications as follows.

In the automobile industries, it can be used as an interior part such as an instrument panel, a console box, an arm rest, a head rest, a door trim, a rear end panel, a pillar trim, a sun visor, a trunk room trim, a trunk lid trim, a box for containing an air bag, a sheet belt buckle, a head liner, a glove box, a steering wheel cover, a ceiling material, a kicking plate and a shift lever boot, or an exterior part such as a spoiler, a body side ornament, a license plate housing, a mirror housing, an air dam skirt or a mad guard.

In the appliance and office automation equipment field, the multi-layer molded article of the present invention can be used as an exterior part of a TV set, a cassette tape recorder, a washing machine, a vacuum cleaner and an air conditioner.

In the sports good field, it can be used as an interior material of a boat or a ship, and a marine sports good.

In the construction and housing field, it can be used as a furniture, a desk, a chair, a gate, a door, a fence, a wall decoration, a ceiling decoration, an indoor flooring such as a flooring of a kitchen, a wash room and a bath room .

Further, the multi-layer molded article of the present invention may be used as a part of an industrial material or a miscellaneous good.

## EXAMPLES

The present invention will be illustrated by the following Examples, which will not limit the scope of the present invention in any way.

A complex dynamic viscosity $\eta^*$ of a polyolefin is calculated according to the above described equation (1) from a dynamic viscoelasticity which is measured using a dynamic spectrometer (RDS-7700 manufactured by Rheometrix Inc.) at a sample temperature of 250°C, a frequency of 1 radian/sec. and an applied strain of 5 % in a parallel plate mode.

An average particle size is a particle size corresponding to a cumulative percentage of 50 % in a weight distribution curve which is depicted according to a particle size distribution obtained using the Tyler standard sieves.

### Reference Example 1

### Preparation of a powder composition for a vinyl chloride resin layer

In a high speed rotary mixer (Super Mixer SMV-20 manufactured by Kawata Manufacturing Co., Ltd.), granular vinyl chloride resin (SUMILIT Sx-8G manufactured by Sumitomo Chemical Co., Ltd.) (90 wt. parts) was charged and heated while stirring at a constant rate. When the temperature reached 80°C, a trimellitate base plasticizer (60 wt. parts), a barium-zinc base stabilizer (3 wt. parts) and a pigment (1 wt. part) were added and dry blended.

When the temperature of the composition reached 120°C, it was cooled to 50°C. Then, a fine particle vinyl chloride resin (SUMILIT Px-QLT) (10 wt. parts) was added and homogeneously dispersed in the composition to obtain a powder composition for a vinyl chloride resin layer. An average particle size: 150 μm.

Reference Example 2

Preparation of a polyolefin thermoplastic elastomer

To EPDM ($ML_{1+4}(100°C)$ = 242; propylene unit content = 28 wt. %; iodine value = 12), a mineral oil base softener (DIANA PROCESS (trademark) PW-380 manufactured by Idemitsu Kosan) (100 wt. parts) was added to obtain an oil-extended EPDM ($ML_{1+4}(100°C)$ = 53).

The oil-extended EPDM (50 wt. parts) and an ethylene-propylene random copolymer resin (ethylene unit content = 5 wt. %; MFR(230) = 90 g/10 min.) (50 wt. parts) and a bismaleimide compound as a crosslinking aid (SUMIFINE (trademark) BM manufactured by Sumitomo Chemical Co., Ltd.) (0.4 wt. part) were kneaded by a Banbury mixer for 10 minutes and extruded in a pellet form to obtain a master batch for crosslinking.

To the master batch (100 wt. parts), 2,5-dimethyl-2,5-di(tert.-butylperoxy)hexane as an organic peroxide (SUNPEROX (trademark) APO manufactured by Sanken Kako Co., Ltd.) (0.1 wt. part) was added and kneaded in a twin-screw extruder (TEX-44 (trademark) manufactured by Nippon Steel Works, Ltd.) at 220°C to effect dynamic crosslinking to obtain elastomer pellets. The pellets were cooled to -100°C in liquid nitrogen and freeze ground to obtain a polyolefin thermoplastic elastomer powder, which had η* of 5.2 x $10^3$ poise. Average particle size: 190 μm.

Reference Example 3

Preparation of a non-foamable powder composition

In the same high speed rotary mixer as used in Reference Example 1, the powder composition for a vinyl chloride resin layer prepared in Reference Example 1 and 48 wt. parts of the polyolefin thermoplastic elastomer powder prepared in Reference Example 2 per 100 wt. parts of the vinyl chloride resin in the powder composition were charged and mixed at 25°C to obtain a powder composition for an adhesive layer.

Reference Example 4

Preparation of a foamable powder composition for an adhesive layer

In the same manner as in Reference Example 1 except that azodicarbonamide (AZ-3 manufactured by Otsuka Chemical Co., Ltd.) (3 wt. parts) as a blowing agent and zinc oxide (1 wt. part) as a blowing aid were used in place of the pigment during dry blending, a foamable powder composition was prepared.

Thereafter, in the same manner as in Reference Example 3 except that the above foamable powder composition was used in place of the composition prepared in Reference Example 1, a foamable powder composition for an adhesive layer was prepared.

Example 1

Production of a composite molded article comprising a vinyl chloride resin layer and a non-foam adhesive layer

On a molding surface of a nickel made mold (15 cm x 15 cm) which was preheated to 240°C, the powder composition for the vinyl chloride resin layer prepared in Reference Example 1 was supplied and maintained for 5 seconds. Immediately thereafter, the unmolten excessive powder was discharged. After 5 seconds, the powder composition for the adhesive layer prepared in Reference Example 3 was supplied on the above formed layer and maintained for 20 seconds. Immediately thereafter, the unmolten excessive powder was discharged.

Then, the mold carrying the layers of the powder compositions was placed in an oven kept at 280°C and heated for 90 seconds. Thereafter, the mold was taken out from the oven and cooled, and a product was removed from the mold to obtain a composite molded article consisting of the vinyl chloride resin layer having a thickness of 0.8 mm and the adhesive layer having a thickness of 0.6 mm.

Production of a multi-layer molded article

On the adhesive layer side of the above produced composite molded article placed on an aluminum sheet, a polypropylene sheet (a block polypropylene containing 15 wt. % of talc. Melt flow index (MFR(190)) = 40 g/10 min. Talc content: 15 wt %) having a thickness of 3 mm which had been heated in an oven at 220°C for 5 minutes was placed at 25°C. On the polypropylene sheet, another aluminum plate was placed. Thereafter, a load of 25 g/cm$^2$ was applied on the other aluminum plate for 5 minutes and then removed to obtain a multi-layer molded article.

After the multi-layer molded article was kept standing for one day, it was cut to a strip having a width of 20 mm, and subjected to a 180 degree peel test at 20°C at a peeling rate of 200 mm/min. The result is shown in Table 1.

Example 2

Production of a multi-layer molded article

A powder composition for an adhesive layer was prepared in the same manner as in Reference Example 3 except that a polyethylene powder having a complex dynamic viscosity $\eta^*$ of 9.3 x 10$^3$ poise (G401 manufactured by Sumitomo Fine Chemical Co., Ltd. Average particle size: 230 $\mu$m) was used in place of the polyolefin thermoplastic elastomer powder prepared in Reference Example 2.

Then, a multi-layer molded article was produced in the same manner as in Example 1 except that the above prepared powder composition was used in place of the powder composition prepared in Reference Example 3.

The result of the peel test is shown in Table 1.

Example 3

Production of a multi-layer molded article

A powder composition for an adhesive layer was prepared in the same manner as in Reference Example 3 except that a polypropylene powder having a complex dynamic viscosity $\eta^*$ of 1.0 x 10$^5$ poise (D501 manufactured by Sumitomo Chemical Co., Ltd. Average particle size: 240 $\mu$m) was used in place of the polyolefin thermoplastic elastomer powder prepared in Reference Example 2.

Then, a multi-layer molded article was produced in the same manner as in Example 1 except that the above prepared powder composition was used in place of the powder composition prepared in Reference Example 3.

The result of the peel test is shown in Table 1.

Comparative Example 1

Production of a multi-layer molded article

A multi-layer molded article was produced in the same manner as in Example 1 except that the powder composition prepared in Reference Example 1 was used in place of the powder composition prepared in Reference Example 3.

The result of the peel test is shown in Table 1.

Comparative Example 2

Production of a multi-layer molded article

A powder composition for an adhesive layer was prepared in the same manner as in Reference Example 3 except that a polyolefin thermoplastic elastomer powder having a complex dynamic viscosity $\eta^*$ of 1.3 x 10$^5$ poise (TPE 820 manufactured by Sumitomo Chemical Co., Ltd. Average particle size: 240 $\mu$m) was used in place of the polyolefin thermoplastic elastomer powder prepared in Reference Example 2.

Then, a multi-layer molded article was produced in the same manner as in Example 1 except that the above prepared powder composition was used in place of the powder composition prepared in Reference Example 3.

The result of the peel test is shown in Table 1.

Comparative Example 3

Production of a multi-layer molded article

A powder composition for an adhesive layer was prepared in the same manner as in Reference Example 3 except that a polyolefin thermoplastic elastomer powder having a complex dynamic viscosity $\eta^*$ of 2.6 x 10$^5$ poise (TPE 3681 manufactured by Sumitomo Chemical Co., Ltd. Average particle size: 230 $\mu$m) was used in place of the polyolefin thermoplastic elastomer powder prepared in Reference Example 2.

Then, a multi-layer molded article was produced in the same manner as in Example 1 except that the above prepared powder composition was used in place of the powder composition prepared in Reference Example 3.

The result of the peel test is shown in Table 1.

Comparative Example 4

Production of a multi-layer molded article

A non-foamable powder composition for an adhesive layer was prepared in the same manner as in Reference Example 3 except that a polyethylene powder having a complex dynamic viscosity $\eta^*$ of 2.3 x 10$^5$ poise (5551Z manufactured by Showa Denko Co., Ltd. Average particle size: 130 μm) was used in place of the polyolefin thermoplastic elastomer powder prepared in Reference Example 3.

Then, a multi-layer molded article was produced in the same manner as in Example 1 except that the above prepared powder composition was used in place of the powder composition prepared in Reference Example 4.

The result of the peel test is shown in Table 1.

Table 1

| Example No. | Complex dynamic viscosity $\eta^*$ (poise) | Peel strength (g/20 mm width) |
|---|---|---|
| 1 | 5.2 x 10$^3$ | 650 |
| 2 | 9.3 x 10$^3$ | 600 |
| 3 | 1.0 x 10$^5$ | 750 |
| Comp. 1 | --- | 70 |
| Comp. 2 | 1.3 x 10$^5$ | 200 |
| Comp. 3 | 2.6 x 10$^5$ | 120 |
| Comp. 4 | 2.3 x 10$^5$ | 120 |

Example 4

Production of a composite molded article consisting of a vinyl chloride resin layer and a foam adhesive layer

On a molding surface of a nickel made mold (15 cm x 15 cm) which had been preheated to 240°C, the powder composition for the vinyl chloride resin layer prepared in Reference Example 1 was supplied and maintained for 5 seconds. Immediately thereafter, the unmolten excessive powder was discharged. Then, the foamable powder composition for the adhesive layer prepared in Reference Example 4 was supplied on the above formed layer and maintained for 20 seconds. Immediately thereafter, the unmolten excessive powder was discharged.

Then, the mold carrying the layers of the powder compositions was placed in an oven kept at 280°C and heated for 90 seconds. Thereafter, the mold was taken out from the oven and cooled, and a product was removed from the mold to obtain a composite molded article consisting of the vinyl chloride resin layer with a thickness of 0.8 mm and the adhesive layer with a thickness of 2.5 mm.

Production of a multi-layer molded article

In the same manner as in Example 1 except that the above produced composite molded article was used, a multi-layer molded article was produced.

The result of the peel test is shown in Table 2.

Example 5

Production of a multi-layer molded article

A foamable powder composition for an adhesive layer was prepared in the same manner as in Reference Example 4 except that a polyolefin thermoplastic elastomer powder having a complex dynamic viscosity $\eta^*$ of 1.4 x 10$^3$ poise (manufactured by Sumitomo Chemical Co., Ltd. Average particle size: 180 μm) (48 wt. parts) was used in place of the polyolefin thermoplastic elastomer powder prepared in Reference Example 2.

Then, a multi-layer molded article was produced in the same manner as in Example 4 except that the above prepared foamable powder composition was used in place of the powder composition prepared in Reference Example 4.

The result of the peel test is shown in Table 2.

Example 6

Production of a multi-layer molded article

A foamable powder composition for an adhesive layer was prepared in the same manner as in Reference Example 4 except that a polyethylene powder having a complex dynamic viscosity $\eta^*$ of 9.3 x $10^3$ poise (G 401 manufactured by Sumitomo Fine Chemical Co., Ltd. Average particle size: 230 μm) (48 wt. parts) was used in place of the polyolefin thermoplastic elastomer powder prepared in Reference Example 2.

Then, a multi-layer molded article was produced in the same manner as in Example 4 except that the above prepared foamable powder composition was used in place of the powder composition prepared In Reference Example 4.

The result of the peel test is shown in Table 2.

Example 7

Production of a multi-layer molded article

A foamable powder composition for an adhesive layer was prepared in the same manner as in Reference Example 4 except that a polypropylene powder having a complex dynamic viscosity $\eta^*$ of 9.8 x $10^4$ poise (B 200 manufactured by Sumitomo Fine Chemical Co., Ltd. Average particle size: 220 μm) (48 wt. parts) was used in place of the polyolefin thermoplastic elastomer powder prepared in Reference Example 2.

Then, a multi-layer molded article was produced in the same manner as in Example 4 except that the above prepared foamable powder composition was used in place of the powder composition prepared in Reference Example 4.

The result of the peel test is shown in Table 2.

Comparative Example 5

Production of a multi-layer molded article

A foamable powder composition was prepared in the same manner as in Reference Example 1 except that azodicarbonamide (AZ-S manufactured by Otsuka Chemical Co., Ltd.) (3 wt. parts) as a blowing agent and zinc oxide (1 wt. part) as a blowing aid were used in place of the pigment.

Then, a multi-layer molded article was produced in the same manner as in Example 4 except that the above prepared foamable powder composition was used in place of the powder composition prepared in Reference Example 4.

The result of the peel test is shown in Table 2.

Comparative Example 6

Production of a multi-layer molded article

A foamable powder composition for an adhesive layer was prepared in the same manner as in Reference Example 4 except that a polyolefin thermoplastic elastomer powder having a complex dynamic viscosity $\eta^*$ of 2.6 x $10^5$ poise (TPE 3681 manufactured by Sumitomo Chemical Co., Ltd. Average particle size: 230 μm) (48 wt. parts) was used in place of the polyolefin thermoplastic elastomer powder prepared in Reference Example 2.

Then, a multi-layer molded article was produced in the same manner as in Example 4 except that the above prepared foamable powder composition was used in place of the powder composition prepared in Reference Example 4.

The result of the peel test is shown in Table 2.

## Comparative Example 7

### Production of a multi-layer molded article

A foamable powder composition for an adhesive layer was prepared in the same manner as in Reference Example 4 except that a polyethylene powder having a complex dynamic viscosity $\eta^*$ of $2.3 \times 10^5$ poise (5551Z manufactured by Showa Denko Co., Ltd. Average particle size: 130 $\mu$m) (48 wt. parts) was used in place of the polyolefin thermoplastic elastomer powder prepared in Reference Example 2.

Then, a multi-layer molded article was produced in the same manner as in Example 4 except that the above prepared foamable powder composition was used in place of the powder composition prepared in Reference Example 4.

The result of the peel test is shown in Table 2.

## Comparative Example 8

### Production of a multi-layer molded article

A foamable powder composition for an adhesive layer was prepared in the same manner as in Reference Example 4 except that a polyethylene powder having a complex dynamic viscosity $\eta^*$ of $3 \times 10^5$ poise (3001Y manufactured by Union Polymer Co., Ltd. Average particle size: 120 $\mu$m) (48 wt. parts) was used in place of the polyolefin thermoplastic elastomer powder prepared in Reference Example 2.

Then, a multi-layer molded article was produced in the same manner as in Example 4 except that the above prepared foamable powder composition was used in place of the powder composition prepared in Reference Example 4.

The result of the peel test is shown in Table 2.

Table 2

| Example No. | Complex dynamic viscosity $\eta^*$ (poise) | Peel strength (g/20 mm width) |
|---|---|---|
| 4 | $5.2 \times 10^3$ | 1420 |
| 5 | $1.4 \times 10^3$ | 3200 |
| 6 | $9.3 \times 10^3$ | 600 |
| 7 | $9.8 \times 10^4$ | 1200 |
| Comp. 5 | --- | 90 |
| Comp. 6 | $2.6 \times 10^5$ | 320 |
| Comp. 7 | $2.3 \times 10^5$ | 180 |
| Comp. 8 | $3.0 \times 10^5$ | 150 |

## Comparative Example 9

### Production of a multi-layer molded article

A foamable powder composition for an adhesive layer was prepared in the same manner as in Reference Example 4 except that a polyolefin thermoplastic elastomer powder having a complex dynamic viscosity $\eta^*$ of $1.4 \times 10^3$ poise (manufactured by Sumitomo Chemical Co., Ltd. Average particle size: 180 $\mu$m) (8 wt. parts) was used in place of the polyolefin thermoplastic elastomer powder prepared in Reference Example 2.

Then, a multi-layer molded article was produced in the same manner as in Example 4 except that the above prepared foamable powder composition was used in place of the powder composition prepared in Reference Example 4.

The result of the peel test is shown in Table 3.

Example 8

Production of a multi-layer molded article

A foamable powder composition for an adhesive layer was prepared in the same manner as in Reference Example 4 except that a polyolefin thermoplastic elastomer powder having a complex dynamic viscosity $\eta^*$ of 1.4 x $10^3$ poise (manufactured by Sumitomo Chemical Co., Ltd. Average particle size: 180 $\mu$m) (16 wt. parts) was used in place of the polyolefin thermoplastic elastomer powder prepared in Reference Example 2.

Then, a multi-layer molded article was produced in the same manner as in Example 4 except that the above prepared foamable powder composition was used in place of the powder composition prepared in Reference Example 4.

The result of the peel test is shown in Table 3.

Example 9

Production of a multi-layer molded article

A foamable powder composition for an adhesive layer was prepared in the same manner as in Reference Example 4 except that a polyolefin thermoplastic elastomer powder having a complex dynamic viscosity $\eta^*$ of 1.4 x $10^3$ poise (manufactured by Sumitomo Chemical Co., Ltd. Average particle size: 180 $\mu$m) (80 wt. parts) was used in place of the polyolefin thermoplastic elastomer powder prepared in Reference Example 2.

Then, a multi-layer molded article was produced in the same manner as in Example 4 except that the above prepared foamable powder composition was used in place of the powder composition prepared in Reference Example 4.

The result of the peel test is shown in Table 3.

Example 10

Production of a multi-layer molded article

A foamable powder composition for an adhesive layer was prepared in the same manner as in Reference Example 4 except that a polyolefin thermoplastic elastomer powder having a complex dynamic viscosity $\eta^*$ of 1.4 x $10^3$ poise (manufactured by Sumitomo Chemical Co., Ltd. Average particle size: 180 $\mu$m) (160 wt. parts) was used in place of the polyolefin thermoplastic elastomer powder prepared in Reference Example 2.

Then, a multi-layer molded article was produced in the same manner as in Example 4 except that the above prepared foamable powder composition was used in place of the powder composition prepared in Reference Example 4.

The result of the peel test is shown in Table 3.

Example 11

Production of a multi-layer molded article

A foamable powder composition for an adhesive layer was prepared in the same manner as in Reference Example 4 except that a polyolefin thermoplastic elastomer powder having a complex dynamic viscosity $\eta^*$ of 1.4 x $10^3$ poise (manufactured by Sumitomo Chemical Co., Ltd. Average particle size: 180 $\mu$m) (320 wt. parts) was used in place of the polyolefin thermoplastic elastomer powder prepared in Reference Example 2.

Then, a multi-layer molded article was produced in the same manner as in Example 4 except that the above prepared foamable powder composition was used in place of the powder composition prepared in Reference Example 4.

The result of the peel test is shown in Table 3.

Comparative Example 10

Production of a multi-layer molded article

A foamable powder composition for an adhesive layer was prepared in the same manner as in Reference Example 4 except that a polyolefin thermoplastic elastomer powder having a complex dynamic viscosity $\eta^*$ of 1.4 x

$10^3$ poise (manufactured by Sumitomo Chemical Co., Ltd. Average particle size: 180 μm) (480 wt. parts) was used in place of the polyolefin thermoplastic elastomer powder prepared in Reference Example 2.

Then, a multi-layer molded article was produced in the same manner as in Example 4 except that the above prepared foamable powder composition was used in place of the powder composition prepared in Reference Example 4.

The result of the peel test is shown in Table 3.

Table 3

| Example No. | Amount of polyolefin (wt. parts) | Peel strength (g/20 mm width) |
|---|---|---|
| Comp. 9 | 8 | 300 |
| 8 | 16 | 520 |
| 5 | 48 | 3200 |
| 9 | 80 | 2000 |
| 10 | 160 | 700 |
| 11 | 320 | 500 |
| Comp. 10 | 480 | 180 |

Example 12

Production of a multi-layer molded article

A foamable powder composition for an adhesive layer was prepared in the same manner as in Reference Example 4 except that a polypropylene powder having a complex dynamic viscosity η* of 9.8 x 10⁴ poise (B 200 manufactured by Sumitomo Fine Chemical Co., Ltd. Average particle size: 400 μm) (48 wt. parts) was used in place of the polyolefin thermoplastic elastomer powder prepared in Reference Example 2.

Then, a multi-layer molded article was produced in the same manner as in Example 4 except that the above prepared foamable powder composition was used in place of the powder composition prepared in Reference Example 4.

The result of the peel test is shown in Table 4.

Example 13

Production of a multi-layer molded article

A foamable powder composition for an adhesive layer was prepared in the same manner as in Reference Example 4 except that a polypropylene powder having a complex dynamic viscosity η* of 9.8 x 10⁴ poise (B 200 manufactured by Sumitomo Fine Chemical Co., Ltd. Average particle size: 1500 μm) (48 wt. parts) was used in place of the polyolefin thermoplastic elastomer powder prepared in Reference Example 2.

Then, a multi-layer molded article was produced in the same manner as in Example 4 except that the above prepared foamable powder composition was used in place of the powder composition prepared in Reference Example 4.

The result of the peel test is shown in Table 4.

Table 4

| Example No. | Average particle size of polyolefin (μm) | Peel strength (g/20 mm width) |
|---|---|---|
| 7 | 220 | 1200 |
| 12 | 400 | 750 |
| 13 | 1500 | 620 |

Example 14

As shown in Fig. 1, in a container 1, a powder composition 3 for a skin layer which was obtained in the same manner as in Reference Example 1 was charged. An opening of a mold 2 for powder molding which has leather grain decoration and had been heated to 240°C was mated with an opening of the container as shown in Fig. 1. Around the mated openings, a frame (not shown) was fixed to integrate the container 1 and the mold 2.

Then, the integrated container 1 and mold 2 were rotated for 5 seconds using an uniaxial rotator to supply the powder composition 3 into the mold 2 to adhere the powder composition to the molding surface having the leather grain decoration. After stopping the rotation, the excessive powder composition was recovered in the container 1.

The container 1 was detached from the mold 2. Then, other container 1 containing the powder composition for the adhesive layer which was obtained in the same manner as in Reference Example 4 was attached to the mold 1 to integrate them together. Again, the integrated other container 1 and mold 2 were rotated for 15 seconds using the uniaxial rotator to adhere the foamable powder composition to the molten layer of the powder composition 3 on the molding surface of the mold 3. After stopping the rotation, the excessive powder composition was recovered in the other container 1.

Then, the other container 1 was detached from the mold 2, and the mold 2 was heated in an oven at 240°C for two minutes to shape the foam adhesive layer. The mold 2 was removed from the oven and cooled to obtain a composite layer 4 consisting of a vinyl chloride resin layer 5 and an adhesive layer 6 as shown in Fig. 2.

As shown in Fig. 3, the mold 2 for powder molding which carried the composite layer 4 was inserted in a mold base 7 to set up a female mold 8.

Thereafter, as shown in Fig. 3, while the female mold 8 and a male mold 9 were in the unclosed state, a polyolefin melt 11 was supplied between the composite layer 4 and the male mold 9 through a resin conduit 10.

As the polyolefin melt 11, a polypropylene resin (SUMITOMO NOBLEN AX 568 manufactured by Sumitomo Chemical Co., Ltd. MFR = 65 g/10 min.), which was heated to 190°C, was used.

Then, the molds were closed under a pressure of 50 kg/cm$^2$ on the molding surface to finish the molding of the polyolefin 12. Thereby, as shown in Fig. 4, a multi-layer molded article 13 consisting of the vinyl chloride resin layer 5, the adhesive layer 6 and the polyolefin layer 12 which were integrated together was obtained.

Fig. 5 shows a cross section of the obtained multi-layer molded article in the mold closing direction. The thicknesses of the vinyl chloride resin layer and the adhesive layer were 0.8 mm and 2.1 mm, respectively, and the thickness of the polyolefin layer was 2.3 mm. On the vinyl chloride resin layer, the leather grain was clearly transferred, and the multi-layer molded article had good appearance. Adhesion between the vinyl chloride resin layer and the polyolefin layer was good. The peel strength between them was 2600 g/20 mm width.

## Claims

1.    An adhesive composition comprising 100 wt. parts of a vinyl chloride resin (A) and 10 to 350 wt. parts of a polyolefin (A) having a complex dynamic viscosity η* of not larger than 1.2 x 10$^5$ poise.

2.    The adhesive composition according to claim 1, which further comprises 20 wt. parts or less of a heat decomposable blowing agent per 100 wt. parts of said vinyl chloride resin.

3.    The adhesive composition according to claim 1 or 2 wherein said polyolefin is a polyolefin-base thermoplastic elastomer.

4.    A molded article comprising an adhesive composition as claimed in any one of claims 1 to 3.

5.    A foam molded article comprising an adhesive composition as claimed in claim 2.

6.    A method for producing a molded article as claimed in any one of claims 4 or 5 comprising powder molding of a powder of said adhesive composition.

7.    A composite molded article comprising a layer of a vinyl chloride resin and an adhesive layer molded from an adhesive composition as claimed in any one of claims 1 to 3.

8.    A method for producing a composite molded article as claimed in claim 7 comprising powder molding a vinyl chloride resin (B) powder to form a layer of the vinyl chloride resin.

9.    The method according to claim 8 which comprises steps of:

   (1) supplying a vinyl chloride resin (B) powder in a mold which is kept at a temperature higher than the melting temperature of said vinyl chloride resin,

(2) heating and fusion melting powder particles on a surface of said mold to form a layer of the vinyl chloride resin, followed by removing of a part of said powder which has not been attached to said surface of the mold,

(3) supplying powder of the adhesive composition according to any one of claims 1 to 3 on the layer of the vinyl chloride resin which is kept at a temperature higher than the melting temperature of said adhesive composition,

(4) attaching and melting said powder of the adhesive composition onto said layer of the vinyl chloride resin to form an adhesive layer, followed by removing a part of the adhesive composition which has not been attached to said layer of the vinyl chloride resin,

(5) optionally heating said layer of the vinyl chloride resin and said adhesive layer of the adhesive composition, especially when the adhesive composition contains a heat decomposable blowing agent, and

(6) cooling the laminate to obtain the composite molded article.

10. A multi-layer molded article comprising a layer of a vinyl chloride resin, a layer of an adhesive composition as claimed in any one of claims 1 to 3, and a layer of a polyolefin.

11. A method for producing a multi-layer molded article comprising steps of laminating a layer of a vinyl chloride resin on one surface of a layer of an adhesive composition as claimed in any one of claims 1 to 3, providing a melt of a polyolefin preheated to a temperature higher than the melting temperature of said polyolefin on the layer of the adhesive composition, pressing said melt to form a layer of the polyolefin, and cooling the laminated layers.

12. A method for producing a multi-layer molded article comprising steps of supplying a composite molded article which comprises a layer of a vinyl chloride resin and a layer of an adhesive composition as claimed in any one of claims 1 to 3, providing a melt of a polyolefin preheated to a temperature higher than the melting temperature of said polyolefin on the layer of the adhesive composition of said composite molded article, pressing said melt to form a layer of the polyolefin, and cooling the laminated layers.

13. A method for producing a multi-layer molded article comprising steps of supplying a composite molded article which comprises a layer of a vinyl chloride resin and a layer of an adhesive composition as claimed in any one of claims 1 to 3 between male and female molds, providing a melt of a polyolefin preheated to a temperature higher than the melting temperature of said polyolefin between the layer of the adhesive composition of said composite molded article and one of the molds facing said layer of the adhesive composition, closing said molds to press said melt to form a layer of the polyolefin, and cooling said molds.

## Patentansprüche

1. Klebstoffmasse, umfassend 100 Gew.-Teile Vinylchloridharz (A) und 10 bis 350 Gew.-Teile Polyolefin (A) mit einer komplexen dynamischen Viskosität $\eta^*$ von höchstens $1,2 \times 10^5$ Poise.

2. Klebstoffmasse nach Anspruch 1, ferner umfassend 20 Gew.-Teile oder weniger eines durch Wärme zersetzbaren Treibmittels je 100 Gew.-Teilevinylchloridharz.

3. Klebstoffmasse nach Anspruch 1 oder 2, wobei das Polyolefin ein thermoplastisches Elastomer auf Polyolefinbasis ist.

4. Formteil, umfassend eine Klebstoffmasse nach einem der Ansprüche 1 bis 3.

5. Geschäumtes Formteil, umfassend eine Klebstoffmasse nach Anspruch 2.

6. Verfahren zur Herstellung eines Formteils nach einem der Ansprüche 4 oder 5, umfassend Pulverformen eines Pulvers der Klebstoffmasse.

7. Verbundformteil, umfassend eine Schicht aus Vinylchloridharz und eine Klebstoffschicht, die aus einer Klebstoffmasse nach einem der Ansprüche 1 bis 3 geformt wurde.

8. Verfahren zur Herstellung eines Verbundformteils nach Anspruch 7, umfassend Pulverformen von Pulver aus Vinylchloridharz (B), wodurch eine Schicht aus dem Vinylchloridharz erzeugt wird.

9. Verfahren nach Anspruch 8, umfassend die Schritte:

(1) Zuführen von Pulver eines Vinylchloridharzes (B) in eine Form, die auf einer höheren Temperatur als der Schmelztemperatur des Vinylchloridharzes gehalten wird,

(2) Erhitzen und Verschmelzen der Pulverteilchen auf der Oberfläche der Form, wodurch eine Schicht des Vinylchloridharzes erzeugt wird, gefolgt von Entfernen eines Teils des Pulvers, das nicht mit der Oberfläche der Form verbunden wurde,

(3) Zuführen von Pulver der Klebstoffmasse nach einem der Ansprüche 1 bis 3 auf die Schicht des Vinylchloridharzes, die auf einer höheren Temperatur als der Schmelztemperatur der Klebstoffmasse gehalten wird,

(4) Ankleben und Schmelzen des Pulvers der Klebstoffmasse auf der Schicht des Vinylchloridharzes, wodurch eine Klebstoffschicht erzeugt wird, gefolgt von Entfernen eines Teils der Klebstoffmasse, die nicht an der Schicht des Vinylchloridharzes angeklebt wurde,

(5) gegebenenfalls Erhitzen der Schicht des Vinylchloridharzes und der Klebstoffschicht aus der Klebstoffmasse, insbesondere wenn die Klebstoffmasse ein durch Wärme zersetzbares Treibmittel enthält, und

(6) Abkühlen des Laminats, wodurch das Verbundformteil erhalten wird.

10. Mehrschichtformteil, umfassend eine Schicht eines Vinylchloridharzes, eine Schicht einer Klebstoffmasse nach einem der Ansprüche 1 bis 3 und eine Schicht eines Polyolefins.

11. Verfahren zur Herstellung eines Mehrschichtformteils, umfassend die Schritte Laminieren einer Schicht aus einem Vinylchloridharz auf eine Oberfläche einer Schicht der Klebstoffmasse nach einem der Ansprüche 1 bis 3, Bereitstellen einer Polyolefinschmelze, die auf eine höhere Temperatur als die Schmelztemperatur des Polyolefins vorgewärmt wurde, auf der Schicht der Klebstoffmasse, Pressen der Schmelze, wodurch eine Schicht des Polyolefins erzeugt wird, und Abkühlen der laminierten Schichten.

12. Verfahren zur Herstellung eines Mehrschichtformteils, umfassend die Schritte Bereitstellen eines Verbundformteils, umfassend eine Schicht aus einem Vinylchloridharz und eine Schicht einer Klebstoffmasse nach einem der Ansprüche 1 bis 3, Bereitstellen einer Polyolefinschmelze, die auf eine höhere Temperatur als die Schmelztemperatur des Polyolefins vorgewärmt wurde, auf der Schicht der Klebstoffmasse des Verbundformteils, Pressen der Schmelze, wodurch eine Schicht des Polyolefins erzeugt wird, und Abkühlen der laminierten Schichten.

13. Verfahren zur Herstellung eines Mehrschichtformteils, umfassend die Schritte Bereitstellen eines Verbundformteils, umfassend eine Schicht aus einem Vinylchloridharz und eine Schicht einer Klebstoffmasse nach einem der Ansprüche 1 bis 3 zwischen der Patrize und Matrize einer Form, Bereitstellen einer Polyolefinschmelze, die auf eine höhere Temperatur als die Schmelztemperatur des Polyolefins vorgewärmt wurde, zwischen der Schicht der Klebstoffmasse des Verbundformteils und einer der Formen, die der Schicht der Klebstoffmasse gegenüber liegt, Schließen der Formen, um die Schmelze zu pressen, wodurch eine Schicht des Polyolefins erzeugt wird, und Abkühlen der Formen.

**Revendications**

1. Composition adhésive comprenant 100 parties en poids d'une résine de chlorure de vinyle (A) et 10 à 350 parties en poids d'une polyoléfine (A) ayant une viscosité dynamique complexe $\eta^*$ de pas plus de $1,2 \times 10^5$ poises.

2. Composition adhésive suivant la revendication 1, qui comprend de plus 20 parties en poids ou moins d'un agent de soufflage décomposable à la chaleur pour 100 parties en poids de ladite résine de chlorure de vinyle.

3. Composition adhésive suivant l'une ou l'autre des revendications 1 et 2, dans laquelle ladite polyoléfine est un élastomère thermoplastique à base de polyoléfine.

4. Article moulé comprenant une composition adhésive suivant l'une quelconque des revendications 1 à 3.

5. Article moulé en mousse comprenant une composition adhésive suivant la revendication 2.

6. Procédé de production d'un article moulé suivant l'une et l'autre des revendications 4 et 5, comprenant le moulage à partir des poudres d'une poudre de la composition adhésive précitée.

7.  Article moulé composite comprenant une couche d'une résine de chlorure de vinyle et une couche d'adhésif moulée à partir d'une composition adhésive suivant l'une quelconque des revendications 1 à 3.

8.  Procédé de production d'un article moulé composite suivant la revendication 7, comprenant le moulage à partir des poudres d'une poudre de résine de chlorure de vinyle (B) pour former une couche de la résine de chlorure de vinyle.

9.  Procédé suivant la revendication 8, qui comprend les étapes suivantes :

    (1) l'apport d'une poudre de résine de chlorure de vinyle (B) dans un moule qui est maintenu à une température supérieure à la température de fusion de ladite résine de chlorure de vinyle,
    (2) le chauffage et la fusion des particules de poudre fondues sur une surface du moule pour former une couche de la résine de chlorure de vinyle, suivie de la séparation d'une partie de la poudre qui n'a pas été fixée à la surface du moule,
    (3) l'apport d'une poudre de la composition adhésive suivant l'une quelconque des revendications 1 à 3, sur la couche de la résine de chlorure de vinyle qui est maintenue à une température supérieure à la température de fusion de ladite composition adhésive,
    (4) la fixation et la fusion de la poudre de la composition adhésive sur la couche de la résine de chlorure de vinyle pour former une couche d'adhésif, suivie de la séparation d'une partie de la composition adhésive qui n'a pas été fixée à la couche de la résine de chlorure de vinyle,
    (5) éventuellement le chauffage de ladite couche de la résine de chlorure de vinyle et de ladite couche d'adhésif de la composition adhésive, en particulier lorsque la composition adhésive contient un agent de soufflage décomposable à la chaleur, et
    (6) le refroidissement du stratifié pour obtenir l'article moulé composite.

10. Article moulé multicouche comprenant une couche d'une résine de chlorure de vinyle, une couche d'une composition adhésive suivant l'une quelconque des revendications 1 à 3 et une couche d'une polyoléfine.

11. Procédé de production d'un article moulé multicouche comprenant les étapes de stratification d'une couche d'une résine de chlorure de vinyle sur une surface d'une couche d'une composition adhésive suivant l'une quelconque des revendications 1 à 3, de formation d'une masse fondue d'une polyoléfine préchauffée à une température supérieure à la température de fusion de ladite polyoléfine sur la couche de la composition adhésive, de pressage de la masse fondue pour former une couche de polyoléfine et de refroidissement des couches stratifiées.

12. Procédé de production d'un article moulé multicouche comprenant les étapes d'apport d'un article moulé composite qui comprend une couche d'une résine de chlorure de vinyle et une couche d'une composition adhésive suivant l'une quelconque des revendications 1 à 3, de formation d'une masse fondue d'une polyoléfine préchauffée à une température supérieure à la température de fusion de la polyoléfine sur la couche de la composition adhésive de l'article moulé composite, de pressage de ladite masse fondue pour former une couche de la polyoléfine et de refroidissement des couches stratifiées.

13. Procédé de production d'un article moulé multicouche comprenant les étapes d'apport d'un article moulé composite qui comprend une couche d'une résine de chlorure de vinyle et une couche d'une composition adhésive suivant l'une quelconque des revendications 1 à 3 entre des moules mâle et femelle, de formation d'une masse fondue d'une polyoléfine préchauffée à une température supérieure à la température de fusion de la polyoléfine entre la couche de la composition adhésive de l'article moulé composite et un des moules faisant face à ladite couche de la composition adhésive, de fermeture desdits moules pour presser la masse fondue de manière à former une couche de la polyoléfine et de refroidissement de ces moules.

Fig. 1

Fig. 2

Fig. 3

Fig. 4

Fig. 5